# EUROPÄISCHE PATENTSCHRIFT

(11) **EP 0 385 184 B1**
(45) Veröffentlichungstag und Bekanntmachung des Hinweises auf die Patenterteilung: **10.11.1993**
(21) Anmeldenummer: 90102865.4
(22) Anmeldetag: 14.02.1990
(51) Int. Cl.: B65D 25/22, B29C 49/26

(54) **Spundfass mit Fassmantel, Fassboden und Fassdeckel aus thermoplastischem Kunststoff**
Bung barrel with a mantle, bottom and cover made of a thermoplastic material
Tonneau à bande avec corps, fond et couvercle en matière thermoplastique

(30) Priorität: 03.03.1989 DE 3906831
(43) Veröffentlichungstag der Anmeldung: 05.09.1990
(73) Patentinhaber: SOTRALENTZ S.A., F-67320 Drulingen (FR)
(72) Erfinder: Wendling, Bruno, F-67320 Drulingen (FR); Roser, Georges, F-67290 Weislingen (FR)
(74) Vertreter: Andrejewski, Walter

(56) Entgegenhaltungen:
- DE-U- 7 327 591
- GB-A- 2 192 173
- US-A- 4 140 236

## Beschreibung

Die Erfindung betrifft ein Spundfaß mit Faßmantel, Faßboden und Faßdeckel, wobei der Faßmantel, der Faßboden sowie der Faßdeckel einteilig aus thermoplastischem Kunststoff geformt sind und zumindest der Faßdeckel zumindest einen Spundverschluß aufweist, wobei der Faßrand im Bereich einer Übergangsrundung zwischen Faßmantel und Faßdeckel mit einem bei der Blasformgehung angeschweißten Trage- und Transportring aus thermoplastischem Kunststoff versehen ist und wobei der Trage- und Transportring einen Ringkopf mit einem horizontalen Unterfassungsbund, sowie einer umlaufenden vertikalen Hinterfassungsfläche und einen Schweißflansch aufweist, der im Bereich der Übergangsrundung mit dem Faßkörper verschweißt ist und auf seiner Außenseite eine im wesentlichen vertikale Begrenzungsfläche aufweist. Der beschriebene Aufbau schließt nicht aus, daß auch im Bereich des Faßbodens und an Faßmantel Rollreifen angeordnet sind. Ein solches Spundfaß ist an dem Trage- und Transportring von einem Manipulator erfaßbar, der maulartige Aufnahmeelemente aufweist, die den Trage- und Transportring am Unterfassungsbund unterfassen und an der Hinterfassungsfläche hinterfassen. Bei der Manipulation eines Spundfasses des beschriebenen Aufbaus mit einem Manipulator, der maulartige Aufnahmeelemente aufweist, hat der Trage- und Transportring, je nach dem Füllgewicht und insbes. bei Stoß, nicht unbeachtliche Beanspruchungen aufzunehmen, die in den Faßkörper abgeleitet werden müssen. Dabei darf die Standzeit oder Lebensdauer eines solchen Spundfasses nicht dadurch beeinträchtigt werden, daß sich der Trage- und Transportring vorzeitig vom Faßkörper, wenn auch nur bereichsweise, löst.

Bei dem Spundfaß, von dem die Erfindung ausgeht (DE-GM 73 27 591) Fig. 3, ist der Ringkopf verhältnismäßig steif und starr ausgeführt. Daraus können Probleme beim Anschweißen des Trage- und Transportringes an dem Faßkörper im Zuge der Blasformgebung resultieren. Auch kann nicht ausgeschlossen werden, daß bei der Manipulation eines entsprechenden Spundfasses mit einem Manipulator, der maulartige Aufnahmeleitungen aufweist, sehr singuläre Beanspruchungen der Schweißverbindung zwischen Trage- und Transportring und Faßkörper auftreten, die die Standzeit der Schweißnaht beeinträchtigen. Bei einer anderen bekannten Ausführungsform (DE-GM 73 27 591, Fig. 4) schließt an den Trage- und Transportring ein schalenförmiges Element an, welches eine Abdeckung des Faßdeckels bildet. Das beeinträchtigt die Verschweißung im Zuge der Blasformgebung. Im Ergebnis ist auch hier die Standzeit der Schweißverbindung beeinträchtigt. Bei einem anderen bekannten Spundfaß (GB-A 2 192 173) ist der Trage- und Transportring über eine Rastverbindung an den Faßmantel angeschlossen.

Der Trage- und Transportring weist hier eine gewisse elastische Deformierbarkeit auf.

Der Erfindung liegt die Aufgabe zugrunde, ein Spundfaß des eingangs beschriebenen Aufbaus so zu gestalten, daß der Trage- und Transportring ohne weiteres alle Beanspruchungen bei der Manipulation des Spundfasses mit einem Manipulator, der maulartige Aufnahmeelemente aufweist, aufnimmt, und zwar unter Abbau von singulären Beanspruchungen, die die Standzeit oder Lebensdauer der Schweißverbindung beeinträchtigen.

Zur Lösung dieser Aufgabe lehrt die Erfindung, daß zwischen dem Ringkopf und dem Schweißflansch ein Dämpfungszwischenstück angeordnet ist, welches einteilig mit dem Ringkopf und dem Schweißflansch verbunden ist und eine radiale Breite aufweist, die nicht größer ist als die radiale Breite des Unterfassungsbundes, daß die vertikale Hinterfassungsfläche einen größeren radialen Abstand zur Faßachse aufweist als der durch Faßdeckel und Faßmantel gebildete Faßrand, und daß Stoßbeanspruchungen des Trage- und Transportringes von dem elastisch verformbaren Dämpfungszwischenstück aufnehmbar sind.

Der Ringkopf kann einen im wesentlichen trapezförmigen oder quadratischen bzw. rechteckigen Querschnitt aufweisen. Nach bevorzugter Ausführungsform der Erfindung besitzt das Zwischenstück eine radiale Breite, die etwa mit der radialen Breite des Unterfassungsbundes übereinstimmt. Nach bevorzugter Ausführungsform der Erfindung ist fernerhin die Anordnung und Ausbildung so getroffen, daß an das Zwischenstück zum Deckel hin ein Abschlußbund anschließt, dessen radiale Breite etwa der radialen Breite des Unterfassungsbundes entspricht und an einen horizontalen Randbereich des Faßdeckels stufenfrei anschließt. Im Rahmen der Erfindung wird zweckmäßigerweise mit einem thermoplastischen Werkstoff gearbeitet, der entsprechend elastisch verformbar eingestellt ist. Die elastische Verformung braucht nur klein zu sein, um die singulären Beanspruchungen durch Verformung ausreichend auszubauen.

Wesentlich ist, daß bei der Herstellung eines erfindungsgemäßen Spundfasses eine einwandfreie Schweißverbindung zwischen dem Trage- und Transportring und dem Faßkörper hergestellt wird. Die Erfindung betrifft auch ein Verfahren zur Herstellung eines Spundfasses, das mit einem einteilig aus thermoplastischem Kunststoff geformten Faßkörper und einem ebenfalls aus thermoplastischem Kunststoff bestehenden Trage- und Transportring arbeitet, wobei der Trage- und Transportring in Form von zwei Halbringen in die Halbformen einer längsgeteilten Blasform eingelegt wird, wobei die Halbformen zusammengefahren und dabei die Halbringe zu dem Trage- und Transportring verbunden werden und wobei anschließend der Faßkörper durch Blasformgebung geformt sowie mit dem Trage- und Transportring verbunden wird. - Bei dem bekannten Verfahren dieser Art, von dem die Erfindung ausgeht (US-PS 4 140 236), erfolgt eine formschlüssige Verbindung zwischen Halbringen und Faßkörper über einen umlaufenden Steg und zusätzliche Formschlußausnehmungen an den Halbringen. Eine Verschweißung zwischen dem Trage- und Transportring einerseits und dem Faßkörper andererseits erfolgt nicht. - Demgegenüber ist das erfindungsgemäße Verfahren **dadurch gekennzeichnet**, daß die Enden der in die Halbformen eingelegten Halbringe über die Stoßflächen der Halbformen einige Millimeter vorstehen, durch Erhitzen thermoplastifiziert und beim Zusammenfahren der Halbformen zur geschlossenen Blasform verschweißt werden, wobei die Halbringe in ihre Aufnahme in der Blasform eingedrückt werden, und daß der durch Verschweißen der Halbringe gebildete Trage- und Transportring einen Schweißflansch aufweist, der im Bereich einer Übergangsrundung zwischen Faßmantel und Faßdeckel bei der Blasformgebung des Faßkörpers an diesen angeschweißt wird.

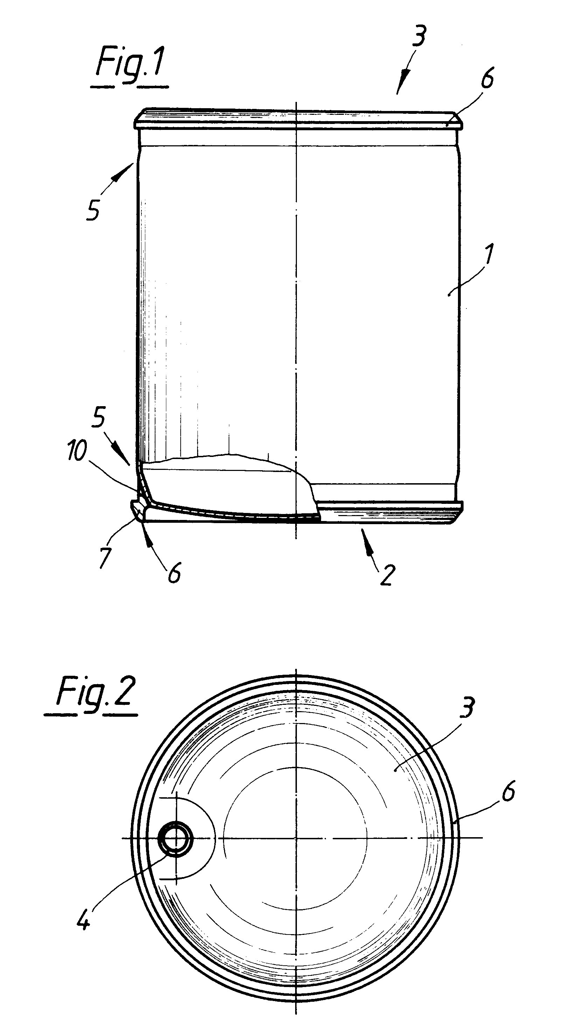

Im folgenden wird die Erfindung anhand einer lediglich ein Ausführungsbeispiel darstellenden Zeichnung ausführlicher erläutert. Es zeigen in schematischer Darstellung
- Fig. 1: die Ansicht eines erfindungsgemäßen Spundfasses,
- Fig. 2: eine Draufsicht auf den Gegenstand nach Fig. 1,
- Fig. 3: in gegenüber den Fig. 1 und 2 wesentlich vergrößertem Maßstab einen Vertikalschnitt durch das erfindungsgemäße Spundfaß, ausschnittsweise,
- Fig. 4: entsprechend der Fig. 3 einen Vertikalschnitt durch eine andere Ausführungsform eines erfindungsgemäßen Spundfasses,
- Fig. 5: ein Schema zur Erläuterung des Verfahrens zur Herstellung eines erfindungsgemäßen Spundfasses und
- Fig. 6: eine Draufsicht auf den Gegenstand nach Fig. 5.

Das in den Figuren dargestellte Spundfaß besitzt einen Faßmantel 1, einen Faßboden 2 und einen Faßdeckel 3. Der Faßmantel 1, der Faßboden 2 sowie der Faßdeckel 3 sind einteilig aus thermoplastischem Kunststoff geformt. Zumindest der Faßdeckel 3 besitzt zumindest einen Sprundverschluß 4. Der Faßrand ist im Bereich einer Übergangsrundung 5 zwischen Faßmantel 1 und Faßdeckel 3 mit einem bei der Blasformgebung angeschweißten Trage- und Transportring 6 aus thermoplastischem Kunststoff versehen. Im Ausführungsbeispiel ist auch im Bereich des Faßbodens 2 ein Ring angebracht, der als Rollreifen dient. Der Trage- und Transportring 6 besitzt einen Ringkopf 7 mit einem Unterfassungsbund 8, eine umlaufende vertikale Hinterfassungsfläche 9 und einen Schweißflansch 10, der im Bereich der Übergangsrundung 5 mit dem Faßkörper verschweißt ist.

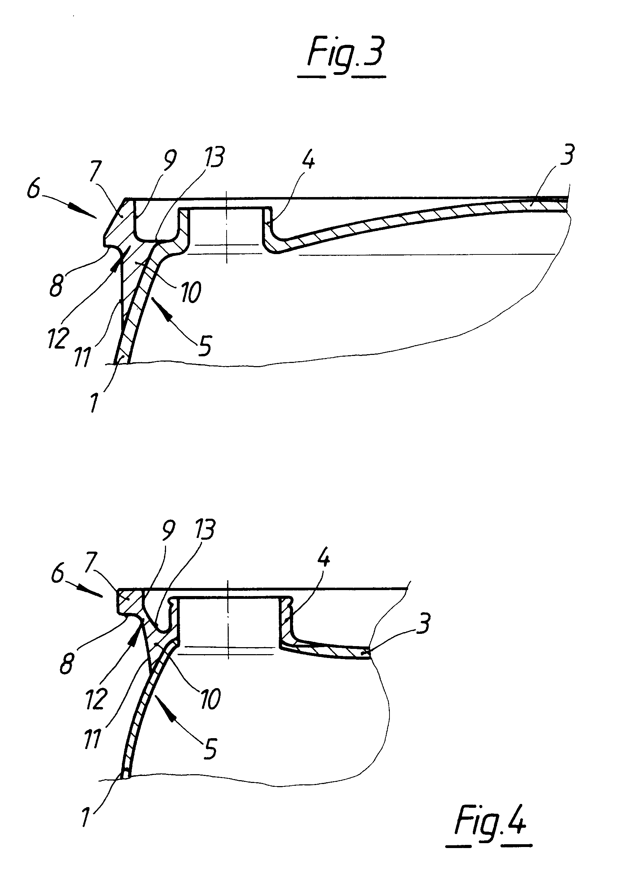

Insbes. aus der Fig. 3 entnimmt man, daß der Ringkopf 7 einen im wesentlichen trapezförmigen Querschnitt aufweist, der im oberen Bereich in Grenzen elastisch verformbar ist. Der trapezförmige Querschnitt ist an der unteren Seite durch den Unterfassungsbund 8 und an der hinteren, zum Faßinnern gerichteten Seite durch die Hinterfassungsfläche 9 gebildet. Die Fig. 4 zeigt die Ausführungsform mit Im Querschnitt quadratischem Ringkopf 7. Der Schweißflansch 10 besitzt in beiden Fällen auf seiner Außenseite eine vertikale Begrenzungsfläche 11, die ein in Grenzen elastisch verformbares Zwischenstück 12 zur Hinterfassungsfläche 9 hin bildet. Das Zwischenstüch 12 besitzt eine radiale Breite, die etwa mit der radialen Breite des Unterfassungsbundes 8 übereinstimmt. An das Zwischenstück 12 schließt zum Faßdeckel 3 hin ein Abschlußbund 13 an, dessen radiale Breite etwa der radialen Breite des Unterfassungsbundes 8 entspricht und der an einen horizontalen Randbereich des Faßdeckels 3 stufenfrei anschließt.

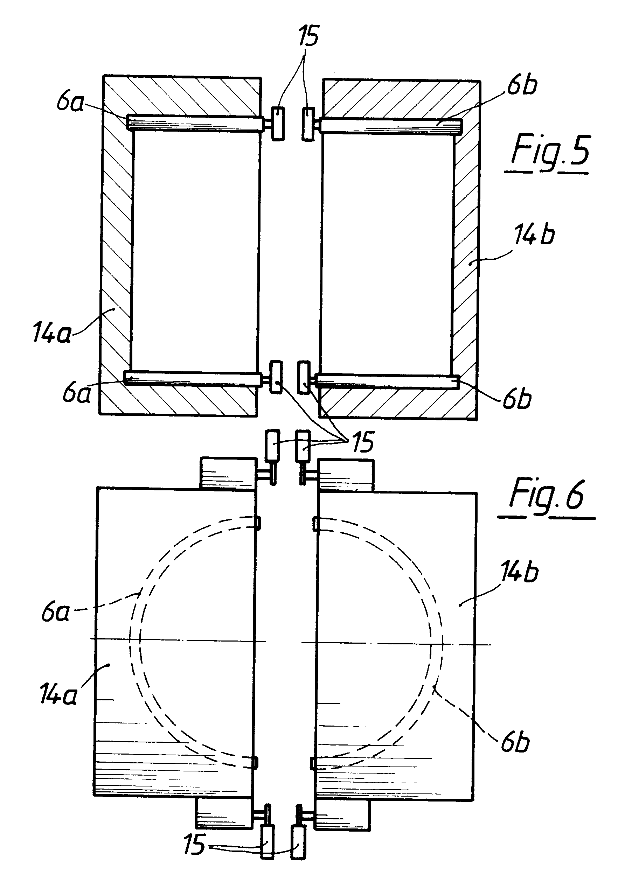

In der Fig. 5 erkennt man eine Form für die Blasformgebung des beschriebenen Fasees. Sie besteht aus zwei Formhälften 14a, 14b, die in der Fig. 5 im Vertikalschnitt dargestellt wurden. Man erkennt in entsprechende Aufnahmen eingelegte Halbringe 6a, 6b, die sich am Spundfaß zu dem Trage- und Transportring 6 ergänzen. In dem dargestellten, geöffneten Zustand der beiden Halbformen 14a, 14b sind die Halbringe 6a, 6b bereits eingelegt. Angedeutet wurde eine Einrichtung 15. die dazu dient, die über die Stoßkanten der Halbformen 14a, 14b ein wenig vorstehenden Enden der Halbringe 6a, 6b durch Erwärmung zu thermoplastifizieren, so daß beim Zusammenfahren der Halbformen 14a, 14b ein Verschweißen der Halbringe 6a, 6b zu einem einheitlichen Trage- und Transportring 6 erfolgt. Es versteht sich, daß vor dem Zusammenfahren der Halbforalen 14a, 14b die Einrichtungen 15 entfernt werden. Im übrigen wird wie üblich ein Schlauchabschnitt, aus dem der Faßkörper durch Blasformgebung hergestellt wird, in die geöffnete Blasform 14a, 14b eingebracht. Danach erfolgt das Zusammenfahren der Halbformen 14a, 14b und das Aufblasen des Schlauches zum Faßkörper, was im einzelnen nicht dargestellt wurde. - Mit der vorstehenden Erläuterung der Fig. 5 versteht man auch die Fig. 6.

## Patentansprüche

1. Spundfaß mit Faßmantel (1), Faßboden (2) und Faßdeckel (3), wobei der Faßmantel (1), der Faßboden (2) sowie der Faßdeckel (3) einteilig aus thermoplastischem Kunststoff geformt sind und zumindest der Faßdeckel (3) zumindest einen Spundverschluß (4) aufweist, wobei der Faßrand im Bereich einer Übergangsrundung (5) zwischen Faßmantel (1) und Faßdeckel (3) mit einem bei der Blasformgebung angeschweißten Trage- und Transportring (6) aus thermoplastischem Kunststoff versehen ist und wobei der Trage- und Transportring (6) einen Ringkopf (7) mit einem horizontalen Unterfassungsbund (8) sowie einer umlaufenden vertikalen Hinterfassungsfläche (9) und ferner einen Schweißflansch (10) aufweist, der im Bereich der Übergangsrundung (5) mit dem Faßkörper verschweißt ist und auf seiner Außenseite eine im wesentlichen vertikale Begrenzungsfläche (11) aufweist, **dadurch gekennzeichnet**, daß zwischen dem Ringkopf (7) und dem Schweißflansch (10) ein Dämpfungszwischenstück (12) angeordnet ist, welches einteilig mit dem Ringkopf (7) und dem Schweißflansch (10) verbunden ist und eine radiale Breite aufweist, die nicht größer ist als die radiale Breite des Unterfassungsbundes (8), daß die vertikale Hinterfassungsfläche (9) einen größeren radialen Abstand zur Faßachse aufweist, als der durch Faßdeckel (3) und Faßmantel (1) gebildete Faßrand, und daß Stoßbeanspruchungen des Trage- und Transportringes (6) von dem elastisch verformbaren Dämpfungszwischenstück (12) aufnehmbar sind.

2. Spundfaß nach Anspruch 1, dadurch gekennzeichnet, daß der Ringkopf (7) einen im wesentlichen trapezförmigen oder quadratischen Querschnitt aufweist.

3. Spundfaß nach einem der Ansprüche 1 oder 2, dadurch gekennzeichnet, daß das Zwischenstück (12) eine radiale Breite aufweist, die etwa mit der radialen Breite des Unterfassungsbundes (8) übereinstimmt.

4. Spundfaß nach einem der Ansprüche 1 bis 3, dadurch gekennzeichnet, daß an das Zwischenstück (12) zum Faßdeckel (3) hin ein Abschlußbund (13) anschließt, dessen radiale Breite etwa der radialen Breite des Unterfassungsbundes (8) entspricht und an einen horizontalen Randbereich des Faßdeckels (3) stufenfrei anschließt.

5. Spundfaß nach einem der Ansprüche 1 bis 4, dadurch gekennzeichnet, daß der Trage- und Transportring (6) aus einem ausreichend elastisch verformbar eingestellten thermoplastischen Kunststoff besteht.

6. Verfahren zur Herstellung eines Spundfasses nach einem der Ansprüche 1 bis 5 mit einem einteilig aus thermoplastischem Kunststoff geformten Faßkörper (1-4) und einem ebenfalls aus thermoplastischem Kunststoff bestehenden Trage- und Transportring (6), wobei der Trage- und Transportring (6) in Form von zwei Halbringen (6a, 6b) in die Halbformen (14a, 14b) einer längsgeteilten Blasform eingelegt wird, wobei die Halbformen (14a, 14b) zusammengefahren und dabei die Halbringe (6a, 6b) zu dem Trage- und Transportring (6) verbunden werden und wobei anschließend der Faßkörper (1-4) durch Blasformgehung geformt sowie mit dem Trage- und Transportring (6) verbunden wird, **dadurch gekennzeichnet**, daß die Enden der in die Halbformen (14a, 14b) eingelegten Halbringe (6a, 6b) über die Stoßflächen der Halbformen einige Millimeter vorstehen, durch Erhitzen thermoplastifiziert und beim Zusammenfahren der Halbformen (14a, 14b) zur geschlossenen Blasform verschweißt werden, wobei die Halbringe (6a, 6b) in ihre Aufnahme in der Blasform eingedrückt werden, und daß der durch Verschweißen der Halbringe gebildete Trage- und Transportring einen Schweißflansch (10) aufweist, der im Bereich einer Übergangsrundung zwischen Faßmantel (1) und Faßdeckel (3) bei der Blasformgebung des Faßkörpers (1-4) an diesen angeschweißt wird.

## Claims

1. A bung barrel with a barrel sidewall (1), a barrel bottom (2) and a barrel top (3), wherein the barrel sidewall (1), the barrel bottom (2) and the barrel top (3) are formed in one piece from synthetic thermoplastic material and at least the barrel top (3) has at least one bung closure (4), wherein the barrel edge is provided in the region of a transitional curvature (5) between the barrel sidewall (1) and the barrel top (3) with a carrying and transport ring (6) made of synthetic thermoplastic material which is welded on during blow-moulding, and wherein the carrying and transport ring (6) comprises a ring head (7) with a horizontal lower engagement collar (8) and a circular vertical rear engagement face (9), and also a weld flange (10) which is welded to the barrel body in the region of the transitional curvature (5) and which comprises a substantially vertical peripheral surface (11) on its outside, characterised in that a damping transition piece (12) is disposed between the ring head (7) and the weld flange (10), which damping transition piece is joined in one piece to the ring head (7) and the weld flange (10) and which has a radial width which is not greater than the radial width of the lower engagement collar (8), that the vertical rear engagement surface (9) is at a greater radial distance from the barrel axis than is the barrel edge formed by the barrel top (3) and the barrel sidewall (1), and that impact stresses on the carrying and transport ring (6) can be absorbed by the elastically deformable damping transition piece (12).

2. A bung barrel according to claim 1, characterised in that the ring head (7) has a substantially trapezoidal or square cross-section.

3. A bung barrel according to one of claims 1 or 2, characterised in that the transition piece (12) has a radial width which approximately corresponds to the radial width of the lower engagement collar (8).

4. A bung barrel according to any one of claims 1 to 3, characterised in that a closure shoulder (13) facing the barrel top (3) adjoins the transition piece (12), the radial width of which closure shoulder approximately corresponds to the radial width of the lower engagement collar (8) and which adjoins a horizontal edge region of the barrel top (3) flush with the latter.

5. A bung barrel according to any one of claims 1 to 4, characterised in that the carrying and transport ring (6) consists of a synthetic thermoplastic material which is adapted to be sufficiently elastically deformable.

6. A process for manufacturing a bung barrel according to any one of claims 1 to 5 with a barrel body (1-4) formed in one piece from synthetic thermoplastic material and a carrying and transport ring (6) which also consists of synthetic thermoplastic material, wherein the carrying and transport ring (6) is inserted into the half-moulds (14a, 14b) of a longitudinally split blowing mould in the form of two half-rings (6a, 6b), wherein the half-moulds (14a, 14b) are moved together and the half-rings (6a, 6b) are thereby joined to form the carrying and transport ring (6), and wherein the barrel body (1-4) is subsequently formed by blow-moulding and joined to the carrying and transport ring (6), characterised in that the ends of the half-rings (6a, 6b) which are inserted into the half-moulds (14a, 14b) project by a few millimetres beyond the abutting surfaces of the half-moulds, are plasticised by heating and are welded when the half-moulds (14a, 14b) are moved together to form the closed blowing mould, wherein the half-rings (6a, 6b) are pressed into their seatings in the blowing mould, and that the carrying and transport ring formed by welding the half-rings has a weld flange (10) which is welded to the barrel body (1-4) during the blow-moulding of the latter in the region of a transitional curvature between the barrel sidewall (1) and the barrel top (3).

## Revendications

1. Tonneau à bonde comportant une enveloppe latérale (1), un fond (2) et un couvercle (3), et dans lequel l'enveloppe latérale (1), le fond (2) ainsi que le couvercle (3) sont formés d'un seul tenant en une matière thermoplastique et qu'au moins le couvercle (3) du tonneau comporte au moins un dispositif de fermeture à bonde (4), le bord du tonneau comportant, au niveau de son arrondi de jonction (5) entre l'enveloppe latérale (1) et le couvercle (3) du tonneau, un anneau de support et de transport (6) qui est soudé lors du formage par soufflage et est réalisé en une matière thermoplastique, et dans lequel l'anneau de support et de transport (6) comporte une tête annulaire (7) possédant un collet horizontal inférieur (8) ainsi qu'une surface circonférentielle verticale arrière (9) et en outre une bride de soudage (10), qui est soudée au corps du tonneau dans la zone de son arrondi de jonction (5) et possède, sur sa face extérieure, une surface limite sensiblement verticale (11), caractérisé en ce qu'entre la tête annulaire (7) et la bride de soudage (10) est disposé un élément intercalaire d'amortissement (12), qui est raccordé d'un seul tenant à la tête annulaire (7) et à la bride de soudage (10) et possède une largeur radiale qui n'est pas supérieure à la largeur radiale du collet inférieur (8), que la surface arrière verticale (9) est séparée de l'axe du tonneau par une distance radiale supérieure à celle du bord du tonneau formé par le couvercle (3) et l'enveloppe latérale (1) du tonneau, et que des contraintes de l'anneau de support et de transport (6) sous l'effet de chocs peuvent être absorbées par l'élément intercalaire d'amortissement (12) déformable élastiquement.

2. Tonneau à bonde selon la revendication 1, caractérisé en ce que la tête annulaire (7) possède une section transversale sensiblement trapézoïdale ou carrée.

3. Tonneau à bonde selon l'une des revendications 1 ou 2, caractérisé en ce que l'élément intercalaire (12) possède une largeur radiale qui est égale approximativement à la largeur radiale du collet inférieur (8).

4. Tonneau à bonde selon l'une des revendications 1 à 3, caractérisé en ce qu'à l'élément intercalaire (12) se raccorde, en direction du couvercle (3) du tonneau, un collet terminal (13), dont la largeur radiale correspond approximativement à la largeur radiale du collet inférieur (8) et qui se raccorde de façon progressive à une partie marginale horizontale du couvercle (3) du tonneau.

5. Tonneau à bonde selon l'une des revendications 1 à 4, caractérisé en ce que l'anneau de support et de transport (6) est réalisé en une matière thermoplastique réglée pour être déformable d'une manière suffisamment élastique.

6. Procédé pour fabriquer un tonneau à bonde selon l'une des revendications 1 à 5, comportant un corps (1-4) réalisé d'un seul tenant en une matière thermoplastique, et un anneau de support et de transport (6) réalisé également en une matière thermoplastique, selon lequel on insère l'anneau de support et de transport (6) sous la forme de deux demi-anneaux (6a,6b) dans les moitiés (14a,14b) d'un moule de soufflage divisé longitudinalement, on rapproche les demi-moules (14a,14b) et on relie les demi-anneaux (6a,6b) de manière à former l'anneau de support et de transport (6), puis on donne sa forme au corps (1-4) du tonneau, par formage avec soufflage et on le raccorde à l'anneau de support et de transport (6), caractérisé en ce que les extrémités des demi-anneaux (6a,6b), qui sont insérés dans les demi-moules (14a,14b), font saillie sur quelques millimètres au-delà des surfaces de butée des demi-moules, qu'on amène à l'état plastifié, par chauffage, les extrémités des demi-anneaux et que lors du rapprochement des demi-moules (14a,14b), on soude les extrémités, pour former le moule de soufflage à l'état fermé, les demi-anneaux (6a,6b) étant repoussés dans leur logement dans le moule de soufflage, et que l'anneau de support et de transport formé par soudage des demi-anneaux possède une bride de soudage (10), qui est soudée sur le corps (1-4) du tonneau, dans la zone d'un arrondi de jonction entre l'enveloppe latérale (1) et le couvercle (3) du tonneau, lors du formage par soufflage dudit corps.
